# EUROPÄISCHE PATENTSCHRIFT

(11) **EP 0 458 738 B1**
(45) Veröffentlichungstag und Bekanntmachung des Hinweises auf die Patenterteilung: **19.06.1996**
(21) Anmeldenummer: 91810311.0
(22) Anmeldetag: 25.04.1991
(51) Int. Cl.: B09B 3/00

(54) **Verfahren zum Kompostieren von mit Schadstoffen kontaminierten Abwasserschlamm und Abfallholz durch aerobes Verrotten sowie eine Anwendung**
Process for composting sewage sludge contaminated with harmful substances together with waste wood by aerobic fermentation and use of the product so obtained
Procédé de compostage de boues résiduaires contaminées par des substances nocives avec des déchets de bois par fermentation aérobie et application du produit obtenu

(30) Priorität: 26.04.1990 CH 1415/90
(43) Veröffentlichungstag der Anmeldung: 27.11.1991
(73) Patentinhaber: WHEELABRATOR CLEAN WATER SYSTEMS INC., Glastonbury, CT 06033 (US)
(72) Erfinder: Stauffer, Hans Fred, CH-3063 Ittigen BE (CH); Obrist, Walter, CH-8155 Niederhasli ZH (CH)
(74) Vertreter: Keller, René, Dr.

(56) Entgegenhaltungen:
- EP-A- 0 102 436
- DE-A- 3 923 641
- US-A- 4 869 877

## Beschreibung

Die Erfindung betrifft ein Verfahren zum Kompostieren von mit Schadstoffen kontaminierten Abwasserschlämmen und Abfallholz durch aerobes Verrotten.

Es ist bekannt, Abwasserschlamm mit Holzschnitzeln zu mischen und in einer Miete zu belüften, sodann nach einer Verweilzeit umzuschichten und weiter zu belüften, wobei dieser Vorgang wiederholt wird. Auf diese Weise werden der Abwasserschlamm und die Holzteile in Gegenwart von Mikroorganismen verrottet, hygienisiert und biologisch stabilisiert, so dass das Endprodukt landwirtschaftlich nutzbar ist. Die Behandlungsdauer beträgt 6 bis 10 Wochen, für Reifekompost bis 20 Wochen.

Derartige Verfahren mit herkömmlichen Kompostmieten und anderen Kompostiersystemen haben Probleme des anaeroben Betriebes, des Kompaktierens, der zuverlässigen Strukturierung und des Wassergehaltes im Endprodukt; insbesondere ergeben sich Umweltbelastungen durch stinkende oder verschmutzte Abluft sowie üble Sickerwässer.

Eine Kompostieranlage ist aus der US-A-4 869 877 bekannt. Sie besteht aus langen Behältern, in welche organisches Abfallmaterial gefüllt wird. Das im Behälter kompostierende Abfall-Material wird mit Hilfe einer entlang dem Behälter verfahrbaren Bewegungsmaschine bewegt und entlang dem Behälter weiterbefördert. Mit einem Ventilationssystem wird Luft in das kompostierende Material geblasen, wenn im Behälter befindliche Temperatursensoren das Ueberschreiten von Grenzwerten anzeigen.

Bei der bekannten Kompostieranlage wird das zu kompostierende Material unbesehen in die Behälter gebracht, wobei eine heterogene, vom zufälligen Anfall der verschiedenen Abfall-Materialien abhängende Zusammensetzung entsteht und die Rottefähigkeit zu wünschen übrig lässt.

Der Erfindung liegt die Aufgabe zugrunde, optimale biologische Verhältnisse für die während des Kompostiervorgangs im kompostierenden Material tätigen Mikroorganismen zu schaffen.

Die Lösung der Aufgabe ist Gegenstand des Patentanspruchs 1.

Bevorzugte Ausführungsarten sind in den abhängigen Patentansprüchen umschrieben.

Beim erfindungsgemässen Kompostierverfahren werden verschiedene Materialien (Abwasserschlämme, Abfallholz, ggf. auch Rinde, Gras, Laub) bevor sie in den Behälter gelangen mit verschiedenen Fördereinrichtungen einem Mischer zugeführt und in diesem homogen vermischt, wobei die verschiedene Materialzufuhr dazu genutzt wird, das Mischmaterial auf ein rottefähiges C/N-Verhältnis zu bringen. Das kompostierende Material wird dann in mehreren Verfahrensstufen gefördert, in denen den in jeder Verfahrensstufe allein tätigen Aerobier stets günstigste Lebensverhältnisse geboten werden durch Aufrechterhalten optimaler Sauerstoff-, Temperatur-, Wassergehalt- und Nährstoffangebot-Parameter, welche Parameter ausserdem maximale Geruchskontrolle ermöglichen.

Bei diesem Kompostierverfahren wird das kompostierende Material in einer Verweilzeit von 14 bis 30 Tagen durch den Bioreaktorbehälter bewegt, wobei die Verweilzeit im wesentlichen durch den gewünschten Reifegrad des als Endprodukt anfallenden Kompostes bestimmt wird.

Ein Ausführungsbeispiel der Erfindung ist im folgenden anhand eines Fliess-Schemas mit Stoff-Bilanz und einer schematischen Darstellung einer Anlage zur Durchführung des Verfahrens erläutert.

Einem nicht dargestellten Mischer werden über eine erste Fördereinrichtung der entwässerte Abwasserschlamm, über eine zweite Fördereinrichtung das zur Einstellung eines rottefähigen C/N-Verhältnisses notwendige, zerkleinerte Abfallholz zugeführt. Ein rottefähiges Mischmaterial weist ein C/N (Kohlenstoff / Stickstoff)-Verhältnis von etwa 30:1 auf. Der zweiten Fördereinrichtung können dem zu kompostierenden Material 16 organische und/oder anorganische Zuschläge zugeführt werden, z.B. um die biologische Zersetzung zu maximalisieren oder das Endprodukt zu veredeln.

Auf einem im Erdboden gegründeten Fundament sind mehrere, im Querschnitt trogförmige, lange Behälter 10 horizontal angeordnet, deren senkrechte Wandlungen 11 wärmeisoliert sind und am vorderen Ende je eine Beladeöffnung für zu kompostierendes Material und am hinteren Ende je eine Entladeöffnung für fertigen Kompost aufweisen. Eine Maschine 19 ist vorgesehen, um das in den Behältern 10 befindliche kompostierende Material 16 mechanisch, mittels kultivierenden Werkzeugen zu verarbeiten, wie intensives Mischen, Zerbröckeln, Lokkern und Bewegen entlang dem Behälter 10.

Der Boden 12 eines jeden Behälters 10 ist in mehrere Zonen 13 unterteilt und der Behälter 10 ist mit einer Belüftungseinrichtung 14 verbunden, die jede Zone 13 über ein von einem Motor angetriebenes Druckgebläse mit Frischluft speist. Die von dem Druckgebläse angesaugte Frischluft wird über Belüftungsrohre 15 in ein Plenum 20 über dem Boden 12 jeder Zone 13 des Behälters 10 gefördert, um dort das in dem Behälter 10 befindliche Kompostierende Material 16 zu durchströmen. Mittels nicht dargestellter Sauggebläse und jeweils oberhalb des durch das kompostierende Material 16 gebildeten Materialkörpers wird ein Unterdruck erzeugt, so dass das über dem Materialkörper jeweils austretende Luft-Gasgemisch abgesaugt und über einen Biofilter gereinigt in die Atmosphäre abgeleitet wird. In die Abluftleitungen können Messgeräte für CO₂ oder dergleichen Messgrössen eingeschaltet sein.

In die senkrechten Wandungen 11 des Behälters 10 sind für jede Zone 13 Temperatursonden 17 eingebaut. In Abhängigkeit der im kompostierenden Material 16 von einer Temperatursonde 17 gemessenen Temperatur T und einer mittels eines nicht dargestellten Monitors überwachten Soll-Temperatur wird eine einzuleitende Luftmenge ermittelt.

Die vom Monitor bestimmte Luftmenge für jede Zone 13 wird über die Betriebsdauer und die Pauseneinstellung des zugeordneten Druckgebläses erzeugt und durch das kompostierende Material (16) geblasen. Ueber einen Computer 18 sind diese Parameter des Steuerungsprogramms einstellbar.

Die Monitor-Ueberwachung der Belüftung 14 bzw. der Gebläse mittels der Rückmeldung der Kompost-Temperatur T kann zuverlässig einen Betriebsbereich von 55 bis 60 °C im kompostierenden Material 16 aufrechterhalten. Ueber den Computer 18 kann der Temperaturverlauf während der Rotte-Zeit registriert, ausgedruckt und graphisch aufgezeichnet werden, um damit den Beweis für hygienisierten Kompost (drei Tage kontinuierlich bei minimum 55 °C) zu erbringen.

Jede Beladeöffnung der Behälter 10 ist für eine Zufuhrvorrichtung und jede Entladeöffnung der Behälter 10 ist für eine Entladevorrichtung vorbereitet.

Die Wirkungsweise der beschriebenen Anlage ist folgende: Das auf ein rottefähiges C/N-Verhältnis und rottefähigen Wassergehalt eingestellte sowie homogen gemischte Material wird mit Hilfe der Zufuhrvorrichtung in einen der Behälter 10 eingebracht, so dass das kompostierende Material 16 im Behälter 10 als langer Materialkörper angeordnet ist. Regelmässig verarbeitet die Maschine 19 das kompostierende Material 16. Die Maschine 19 beginnt dazu am hinteren Ende des Behälters 10, entfernt den fertigen Kompost und bewegt sich gegen das vordere Ende zu - mischend, lockernd sowie zerbröckelnd -.

Das kompostierende Material 16 wird dabei eine Distanz entlang dem Behälter 10 bewegt und damit wird Raum geschaffen für eine neue Ladung Mischmaterial. Während des Rotteprozesses wird in jeder Zone 13 Luft vom Boden 12 des Behälters 10 intervallartig durch das kompostierende Material 16 geblasen. Kontinuierlich wird die Temperatur T im kompostierenden Material 16 gemessen und im Monitor ausgewertet. Die Belüftung wird über den Monitor so dosiert, dass möglichst allen im kompostierenden Material 16 vorhandenen aeroben Mikroorganismen optimale Lebensverhältnisse geboten werden, damit sich diese explosionsartig vermehren können und so durch ihre Stoffwechselvorgänge den Abbau der organischen Stoffe in Abwasserschlamm und Abfallholz zu kompost in kürzerer Zeit als in der Natur geschehend durchführen. Mit dieser optimalen aeroben Mikroorganismentätigkeit wird in Verbindung mit einem geschlossenen Gebäude für die Anlage grösstmögliche Geruchskontrolle erreicht. Die Intervall-Belüftung mittels des Druckgebläses erfolgt in der Weise, dass etwas ein Luftvolumen des 1- bis 3-fachen Rauminhaltes der Behälter-Zone 13 in 10- bis 45-Minuten Betriebsdauer durch das kompostierende Material 16 in der Behälter-Zone 13 gedrückt wird, die von 1- bis 20-Minuten Pausen unterbrochen sind. Sowohl die Betriebsdauer als auch die Pauseneinstellung ist einstellbar mit Hilfe des erwähnten Computers 18. Der aus dem Behälter 10 entladene Kompost kann nunmehr direkt gestapelt oder einer Verbrennungsanlage zugeführt werden.

Beim Erreichen unerwünschter Trockenheit des kompostierenden Materials kann diesem im offenen Behälter Wasser zugeführt werden. In der Regel muss aber Wasser abgeführt werden, was insbesondere durch die in Zonen durchgeführte Intervallbelüftung steuerbar erfolgt. Durch die beschriebene Aufteilung in Zonen der Verrottung können optimale Verhältnisse auf kleinstem Raum bei grossen Anlagen erreicht werden, die zu einer Verbesserung des Endproduktes führen.

Es ist auch möglich, die Verweilzeit des kompostierenden Materials im Behälter so einzustellen, dass im Behälter nur eine teilweise Verrottung oder die vollständige Verrottung und Reifung erfolgt. Auch hier wird die beschriebene Belüftung beibehalten, so dass im Behälter nur aerobe Abbauvorgänge stattfinden. Darüber hinaus ist die Zuführung von geeigneten Nährstoffen und/oder Zuschlägen in jeder Zone des Behälters ist möglich, so dass eine Verbesserung des Kompostes bzw. aber der Brennstoff-Herstellung aus Kompost erzielbar ist.

Im Vergleich der Abfall-Entsorgung von verbrennbarem Hauskehricht zu verbrennbarem mit Schadstoffen kontaminierten Abwasserschlamm ergeben sich recht unterschiedliche Mengen (geschätzt 1990):

| | | |
|---|---|---|
| Verbrennbarer Hauskehricht | | 450 kg/a pro Einwohner |
| Abwasserschlamm mit 2 1/2 % Trockensubstanz, nass | | 350 kg/a pro Einwohner |
| daraus Trockensubstanz, trocken | | 9 kg/a pro Einwohner |
| zusätzlich Holzabfall | | 5 kg/a pro Einwohner |
| kompostierte | Trockensubstanz | 14 kg/a pro Einwohner |
| | mit Anteil Wasser | 5 kg/a pro Einwohner |
| Verbrennbarer ARA-Schlamm-Kompost | | 19 kg/a pro Einwohner |

d.h.
Die Kehricht-Menge ist ca. 20 x grösser als die Schlamm-Menge.

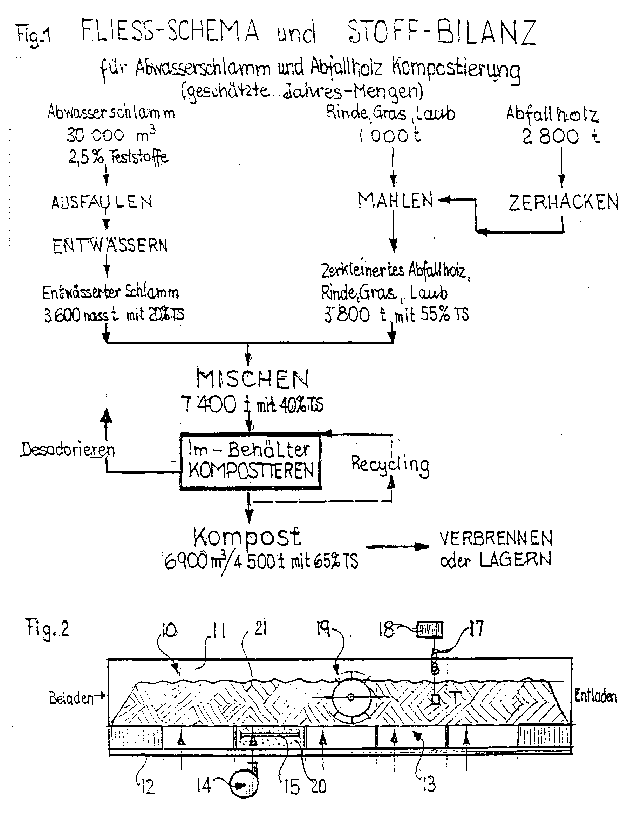

## Patentansprüche

1. Verfahren zum Kompostieren von mit Schadstoffen kontaminierten Abwässerschlämmen und Abfallholz durch aerobes Verrotten, wobei die Abwässerschlämme entwässert und das Abfallholz zerkleinert wird,
a) unter Zufuhr von Abwasserschlämme enthaltendem erstem Material mittels einer ersten Fördereinrichtung und von Abfallholz sowie gegebenenfalls Rinde, Gras und/oder Laub enthaltendem zweiten Material mittels einer zweiten Fördereinrichtung zu einem Mischer in diesem ein homogen gemischtes Material hergestellt wird,
b) das C/N-Verhältnis und der Wassergehalt des gemischten Materials durch entsprechende Zufuhr auf ein rottefähiges Mass eingestellt wird,
c) das rottefähige Mischmaterial in einen langen Behälter eingebracht und während des Kompostierens regelmässig gemischt, aufgelockert sowie dem Behälter entlang bewegt wird,
d) das kompostierende Material in Intervallen und in mehreren Verfahrensstufen mittels computerisiertem Temperatur-Monitoring belüftet wird, um einen hohen Sauerstoff-Level im Material beizubehalten und um die Temperatur zu limitieren zum Erhalt von stabilisiertem, hygienisiertem und trockenem Kompost aus dem Behälter.

2. Verfahren nach Anspruch 1, dadurch gekennzeichnet, dass in allen Verfahrensstufen ausschliesslich aerob gerottet wird.

3. Verfahren nach Anspruch 2, dadurch gekennzeichnet, dass das Mischmaterial in den Behälter an dessen vorderem Ende eingebracht und nach einer Verweilzeit aus dem Behälter an dessen hinterem Ende ausgebracht wird, jeder Partikel des aus kompostierendem Material bestehenden Materialkörpers im Behälter innerhalb einer günstigen Verweilzeit von 14 bis 30 Tagen durch den Behälter bewegt wird, und das kompostierende Material während dieser Verweilzeit von unten her intervallartig in den einzelnen Zonen derart belüftet wird, dass innerhalb des kompostierenden Materials in jeder Zone sich eine etwa gleichmässige Wärme- und Sauerstoffschichtung mit einer aeroben Mikroorganismen-Population ausbildet, zum Zwecke der Verrottung und möglichen Reifung jedes Partikels des kompostierenden Materials.

4. Verfahren nach einem der Ansprüche 1 bis 3, dadurch gekennzeichnet, dass das intervallartige Belüften in den einzelnen Verfahrensstufen mittels Temperatur-monitoring durch Intervallbetrieb von Druckgebläsen erzeugt wird, und dass die Intervalldauer geändert wird, insbesondere die Blasdauer und die Pausendauer geändert werden.

5. Verfahren nach einem der Ansprüche 1 bis 4, dadurch gekennzeichnet, dass dem kompostierenden Material Nährstoffe und/oder organische bzw. anorganische Zuschläge zugegeben werden.

6. Verfahren nach Anspruch 3, dadurch gekennzeichnet, dass das kompostierende Material im Behälter mit wässeriger Flüssigkeit vermengt wird.

7. Verfahren nach einem der Ansprüche 1 bis 6, dadurch gekennzeichnet, dass die Belüftung in jeder Verfahrensstufe durch Erzeugen von Ueberdruck erfolgt.

8. Verfahren nach einem der Ansprüche 1 bis 7, dadurch gekennzeichnet, dass das gemischte Material auf ein rottefähiges C/N-Verhältnis von etwa 30:1 gebracht wird.

9. Verfahren nach einem der Ansprüche 1 bis 8, dadurch gekennzeichnet, dass das kompostierende Material mit oder ohne Zuschläge zu Brennstoff verarbeitet wird.

## Claims

1. Process for composting sewage sludge contaminated with harmful substances together with waste wood by aerobic degradation, the sewage sludge being dewatered and the waste wood being comminuted,
a) with the introduction of a first material containing sewage sludge by means of a first conveyor device and of a second material containing waste wood and, optionally, bark, grass and/or leaves by means of a second conveyor device into a mixer, a homogeneously mixed material is produced in this mixer;
b) the C/N ratio and the water content of the mixed material is adjusted to a degradable mass by appropriate supply;
c) the degradable mixed material is introduced into a long container and, during composting, is regularly mixed, loosened and moved along the container;
d) the composting material is aerated at intervals and in several process stages by computerised temperature monitoring in order to maintain a high oxygen level in the material and in order to limit the temperature in order to obtain stabilised, hygienised and dry compost from the container.

2. Process according to Claim 1, characterised in that degradation is exclusively aerobic in all process stages.

3. Process according to Claim 2, characterised in that the mixed material is introduced into the container at the front end thereof and, after a residence time, is discharged from the container at the rear end thereof, each particle of the material body comprising composting material, in the container, is moved through the container within an advantageous residence time of from 14 to 30 days, and, during this residence time, the composting material is aerated from below at intervals in the individual zones in such a manner that an approximately uniform heat and oxygen layering with an aerobic microorganism population is formed inside the composting material in each zone, for the purpose of degrading and possibly maturing each particle of the composting material.

4. Process according to any one of Claims 1 to 3, characterised in that the intermittent aeration is brought about in the individual process stages by means of temperature monitoring by intermittent operation of forced draught fans, and in that the interval duration is changed, especially the blowing duration and the rest duration are changed.

5. Process according to any one of Claims 1 to 4, characterised in that nutrients and/or organic or inorganic additives are added to the composting material.

6. Process according to Claim 3, characterised in that the composting material in the container is mixed with aqueous liquid.

7. Process according to any one of Claims 1 to 6, characterised in that aeration is effected in each process stage by producing excess pressure.

8. Process according to any one of Claims 1 to 7, characterised in that the mixed material is brought to a degradable C/N ratio of approximately 30:1.

9. Process according to any one of Claims 1 to 8, characterised in that the composting material is processed with or without additives to form fuel.

## Revendications

1. Procédé pour le compostage de boues résiduaires contaminées par des substances nocives et de déchets de bois par fermentation aérobie, dans lequel ces boues sont déshydratées et ces déchets de bois sont fragmentés, dans lequel:
a) un matériau mélangé de façon homogène est produit dans un mélangeur avec apport dans celui-ci d'un premier matériau contenant des boues résiduaires, au moyen d'un premier dispositif d'alimentation, et d'un second matériau contenant des déchets de bois ainsi qu'éventuellement des écorces, de l'herbe et/ou des feuilles, au moyen d'un second dispositif d'alimentation,
b) le rapport C/N et la teneur en eau du matériau mélangé sont ajustés, par un apport convenable, pour l'obtention d'une masse fermentescible,
c) le matériau mélangé fermentescible est introduit dans un grand récipient et, pendant le compostage, régulièrement mélangé, désagrégé et mis en mouvement le long de ce récipient,
d) le matériau en compostage est aéré à intervalles et en plusieurs étapes de processus, au moyen d'un contrôle informatisé de la température, afin de maintenir dans le matériau un taux élevé d'oxygène et afin de limiter la température pour l'obtention d'un compost stabilisé, désinfecté et sec, à partir de ce récipient.

2. Procédé selon la revendication 1, caractérisé en ce que la fermentation est effectuée en mode exclusivement aérobie, dans toutes les étapes du processus.

3. Procédé selon la revendication 2, caractérisé en ce que le matériau mélangé est introduit dans le récipient à son extrémité avant et, après un temps de séjour, est déchargé du récipient à son extrémité arrière, chaque particule du matériau en cours de compostage étant mise en mouvement dans le récipient le long de celui-ci avec un temps de séjour avantageusement de 14 à 30 jours, ce matériau en cours de compostage étant aéré pendant ce temps de séjour, par le bas et par intervalles dans des zones individuelles, de manière qu'à l'intérieur de ce matériau il se forme, dans chaque zone, une stratification de chaleur et d'oxygène à peu près uniforme, avec une population de microorganismes aérobies, en vue de la fermentation et de l'éventuelle digestion de chaque particule du matériau.

4. Procédé selon l'une quelconque des revendications 1 à 3, caractérisé en ce que l'aération par intervalles dans les étapes individuelles du processus est effectuée au moyen d'un contrôle de la température, par fonctionnement intermittent de ventilateurs soufflants, et en ce que la durée des intervalles est modifiée, en particulier la durée de soufflage et la durée d'arrêt.

5. Procédé selon l'une des revendications 1 à 4, caractérisé en ce que l'on ajoute au matériau en cours de compostage des substances nutritives et/ou des compléments organiques ou minéraux.

6. Procédé selon la revendication 3, caractérisé en ce que le matériau en cours de compostage est mélangé dans le récipient avec un liquide aqueux.

7. Procédé selon l'une quelconque des revendications 1 à 6, caractérisé en ce que l'aération est effectuée, dans chaque étape du processus, par production d'une surpression.

8. Procédé selon l'une quelconque des revendications 1 à 7, caractérisé en ce que le matériau mélangé est amené à un rapport C/N, fermentescible, d'environ 30:1.

9. Procédé selon l'une quelconque des revendications 1 à 8, caractérisé en ce que le matériau en cours de compostage est transformé, avec ou sans adjuvant, en combustible.
